Europäisches Patentamt

European Patent Office

Office européen des brevets

(11) Numéro de publication: **0 415 823 A1**

## DEMANDE DE BREVET EUROPEEN

(21) Numéro de dépôt: **90402336.3**

(22) Date de dépôt: **22.08.90**

(51) Int. Cl.⁵: **H01S 3/09**

(30) Priorité: **24.08.89 FR 8911214**

(43) Date de publication de la demande:
**06.03.91 Bulletin 91/10**

(84) Etats contractants désignés:
**DE FR GB**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Etievant, Claude 44 rue Saint Charles F-78000 Versailles(FR)**

(74) Mandataire: **Mongrédien, André et al c/o BREVATOME 25, rue de Ponthieu F-75008 Paris(FR)**

(54) **Laser à électrons libres.**

(57) Il comprend une source (2) d'électrons, des moyens (4) d'accélération des électrons, qui fournissent un faisceau d'électrons, un anneau de stockage (6) de ce faisceau, comportant au moins une partie rectiligne, des moyens magnétiques (22) prévus pour créer une configuration magnétique fermée, ayant une première composante qui est principalement dirigée parallèlement au faisceau d'électrons en circulation et qui permet le confinement de ce faisceau, et une seconde composante apte à compenser la dérive des électrons transversalement à l'axe du faisceau d'électrons, et au moins un onduleur magnétique (10) qui est placé au niveau de la partie rectiligne et qui est traversé par le faisceau d'électrons. Application à la fusion contrôlée par confinement magnétique.

FIG. 1

La présente invention concerne un laser à électrons libres qui est adapté à l'émission d'un rayonnement électromagnétique de très forte puissance dans le domaine des ondes millimétriques et dans l'infrarouge lointain.

Dans tout ce qui suit, le mot "laser" est pris aussi bien dans le sens d'amplificateur que d'oscillateur.

L'invention trouve notamment des applications dans le domaine des télécommunications et dans le domaine de la fusion contrôlée par la voie du confinement magnétique.

On sait que, dans les recherches sur la physique des Tokamaks, on s'intéresse à des procédés
- de diagnostic (voir le document (1) qui, comme les autres documents cités par la suite, est mentionné à la fin de la présente description),
- de génération de courant (voir les documents (2) et (3)),
- de chauffage (voir les documents (4) et (5)), procédés qui nécessitent des sources millimétriques de puissance supérieure à 1 MW en régime quasiment continu.

Les sources de rayonnement électromagnétique qui sont envisageables pour de telles applications sont essentiellement les gyrotrons et les lasers à électrons libres, ces derniers étant notamment connus par le document (6) auquel on se reportera.

Les lasers à électrons libres présentent divers avantages par rapport aux gyrotrons et notamment l'accordabilité en fréquence et la possibilité de couvrir le domaine des ondes millimétriques et submillimétriques, l'infrarouge lointain ..., sans modification majeure de conception.

Divers expériences ont déjà été réalisées sur les lasers à électrons libres et en particulier une expérience qui est mentionnée dans le document (7) et au cours de laquelle on a pu obtenir un rayonnement électromagnétique de puissance 11,5 MW et de fréquence 120 GHz, sous la forme d'impulsions dont la durée était de l'ordre de quelques nanosecondes.

La présente invention a pour objet un laser à électrons libres, apte à émettre un rayonnement électromagnétique de forte puissance sous la forme d'impulsions de durée beaucoup plus longue, par exemple un rayonnement électromagnétique de puissance supérieure à 1 MW, dans le domaine spectral allant de 150 GHz à 300 GHz environ, sous la forme d'impulsions de durée supérieure à une milliseconde, répétitives en régime continu.

A cet effet, la présente invention utilise un faisceau d'électrons qui est accéléré et stocké dans un anneau de stockage dans lequel on crée un champ magnétique axial, principalement dirigé parallèlement au faisceau d'électrons.

De façon précise, la présente invention a pour objet un laser à électrons libres, caractérisé en ce qu'il comprend :
- une source d'électrons,
- des moyens d'accélération qui sont aptes à accélérer les électrons issus de la source et qui fournissent un faisceau d'électrons,
- un anneau de stockage de ce faisceau d'électrons, comportant au moins une partie rectiligne,
- des moyens magnétiques prévus pour créer une configuration magnétique fermée, ayant une première composante de champ magnétique, qui est principalement dirigée parallèlement au faisceau d'électrons en circulation et qui permet le confinement de ce faisceau, et une seconde composante de champ magnétique, qui est apte à compenser la dérive des électrons transversalement à l'axe du faisceau d'électrons, et
- au moins un onduleur magnétique dont est muni l'anneau de stockage, qui est placé au niveau de ladite partie rectiligne et qui est traversé par le faisceau d'électrons en circulation dans l'anneau.

La structure du laser à électrons libres objet de l'invention se prête avantageusement à la production d'impulsions électromagnétiques de longue durée et de forte puissance dans le domaine des ondes millimétriques et dans l'infrarouge lointain, la recirculation du faisceau d'électrons conduisant à un bilan énergétique favorable, le rendement de conversion du laser (rapport de la puissance électromagnétique produite à la puissance nécessaire au fonctionnement du laser) étant important.

Dans la présente invention, on utilise un champ magnétique axial qui est refermé sur lui-même suivant une configuration en anneau. Une configuration en hippodrome est intéressante pour la présente invention puisqu'elle comporte deux parties rectilignes au niveau de l'une desquelles on peut placer un onduleur magnétique ("magnetic wiggler" dans les publications en langue anglaise) mais, de façon générale, toute configuration fermée en anneau, présentant au moins une partie rectiligne au niveau de laquelle peut être placé un onduleur magnétique, est utilisable dans la présente invention.

A titre d'exemple, en vue de produire un rayonnement électromagnétique de forte puissance sous la forme d'impulsions de longue durée, on peut maintenir, pendant le temps d'émission du laser, l'intensité $I$ du faisceau d'électrons à une valeur de l'ordre de 100 à 500 A, l'énergie $E$ des électrons à une valeur de l'ordre de 400 à 1000 keV, et le champ magnétique axial $Bz$ à une valeur de l'ordre de 1T.

Pour ce faire, la production du faisceau d'électrons et la production du champ magnétique axial jouent un rôle important.

On a vu que, dans la présente invention, on travaille en régime de faisceau annulaire, réalisé dans une configuration magnétique à champ axial, fermée sur elle-même, ce qui permet la recirculation du faisceau d'électrons. Une telle configuration magnétique est déjà connue mais pour une toute autre utilisation, à savoir le confinement d'un plasma chaud pour la fusion thermo-nucléaire contrôlée.

A ce propos, on indique que, dans la présente invention, on peut utiliser une configuration magnétique dont la seconde composante est une composante poloïdale donnant aux lignes de champ magnétique une transformation rotationnelle permettant la compensation de la dérive des électrons transversalement à l'axe du faisceau d'électrons.

On utilise par exemple une configuration magnétique de type Stellarator ou une configuration magnétique de type Torsatron. Des précisions seront données par la suite sur ces deux configurations qui sont bien adaptées au stockage d'un faisceau d'électrons intense.

On peut aussi utiliser une configuration de type Tokamak.

En revenant au problème de la production du faisceau d'électrons et aux valeurs données plus haut à titre d'exemple, on notera que la recirculation du faisceau d'électrons est intéressante du point de vue énergétique. En effet, si les électrons sont confinés dans l'anneau de stockage pendant N tours, il suffit que le courant électronique à injecter pour former le faisceau d'électrons (d'intensité I) ait une intensité égale à I/N et que l'on dépense une puissance P/N pour former ce faisceau d'électrons, P étant égal à I.V, avec V de l'ordre de 400 à 1000 kV.

Si le confinement du faisceau d'électrons dans la configuration magnétique est de bonne qualité et si N est très grand, la puissance à fournir pour accélérer le faisceau reste dans des limites acceptables.

Par exemple, en utilisant un anneau de stockage dont le périmètre est de l'ordre de 3 mètres, des temps de confinement de l'ordre de 10 microsecondes ou plus permettent d'obtenir un nombre de tours N au moins égal à 1000, et de ce fait, de ramener la puissance qui doit être dépensée pour former le faisceau d'électrons dans des limites acceptables.

En ce qui concerne le champ magnétique axial, ce champ magnétique joue, dans la présente invention, deux rôles essentiels.

D'une part, il assure le guidage du faisceau d'électrons et empêche ce faisceau de se disperser sous l'effet des forces transverses qui sont dues à la charge d'espace.

D'autre part, ce champ magnétique axial permet au faisceau d'électrons d'entrer en résonance avec l'onduleur magnétique. Ceci se produit lorsque la vitesse des électrons introduit, par effet Doppler, un décalage de fréquence amenant les électrons à "voir" la perturbation due à l'onduleur magnétique à leur propre fréquence cyclotronique.

La production du champ magnétique axial nécessite bien entendu une dépense d'énergie électrique dans des bobinages destinés à créer ce champ et situés à l'extérieur de l'anneau de stockage (réalisé en un matériau amagnétique).

On estime qu'une puissance électrique de l'ordre de 400 kW, pour un anneau de stockage dont le périmètre est de l'ordre de 3 mètres, permet d'obtenir un champ axial de l'ordre de 1 T.

Une telle puissance, bien qu'importante, reste faible devant une puissance supérieure à 1 MW pour le rayonnement électromagnétique émis par un laser conforme à l'invention et devant une puissance supérieure à 40 MW pour le faisceau d'électrons transporté.

On voit qu'il est intéressant de faire circuler le faisceau d'électrons un grand nombre de fois grâce à champ magnétique de confinement.

En définissant le rendement global $n_g$ du laser par la formule suivante :

$$n_g = P_e/(P_e + (P_f/N) + P_b)$$

formule dans laquelle $P_e$, $P_f$ et $P_b$ représentent respectivement la puissance du rayonnement électromagnétique émis par le laser, la puissance transportée par le faisceau d'électrons et la puissance électrique dépensée dans les bobinages extérieurs, on estime que l'on peut obtenir un rendement global supérieur à 0,5.

Selon un mode de réalisation préféré du laser objet de l'invention, la source d'électrons est placée à l'intérieur de l'anneau de stockage et comprend des moyens d'émission d'électrons et d'envoi de ceux-ci sur l'axe magnétique de la configuration magnétique, axe magnétique le long duquel il sont ensuite accélérés.

De préférence, les moyens d'accélération des électrons comprennent des moyens aptes à engendrer et à faire varier temporellement un flux magnétique dans une surface plane délimitée par l'anneau de stockage, la variation de flux magnétique induisant, dans l'anneau de stockage, un champ électrique longitudinal.

Alors, les moyens d'accélération des électrons peuvent par exemple comprendre un transformateur comportant :
- un circuit magnétique traversant la surface plane délimitée par l'anneau de stockage, et
- un circuit primaire commandé de façon à obtenir ladite variation de flux magnétique,
le faisceau d'électrons en circulation dans l'anneau de stockage formant un circuit secondaire pour le transformateur.

En effet, il est plus simple de former et d'accélérer le faisceau d'électrons dans l'anneau de stockage que de former et d'accélérer ce faisceau d'électrons à l'extérieur de l'anneau de stockage pour l'injecter ensuite dans la configuration magnétique utilisée.

Selon un mode de réalisation particulier du laser objet de l'invention, le trajet suivi par le faisceau d'électrons comporte une pluralité de parties rectilignes, le laser comprend une pluralité d'onduleurs magnétiques respectivement placés au niveau des parties rectilignes et successivement traversés par le faisceau d'électrons et le laser comprend en outre, entre chaque onduleur magnétique et l'onduleur magnétique suivant, des moyens de réflexion de lumière tels que la lumière (ou rayonnement électromagnétique) engendrée dans chaque onduleur soit réfléchie vers l'onduleur suivant.

Dans ce cas, les onduleurs magnétiques peuvent être répartis le long de l'anneau de stockage, de sorte que la trajectoire de la lumière engendrée dans le laser a la forme d'un polygone.

Une telle structure est bien adaptée à la réalisation d'un laser à électrons libres muni d'une configuration magnétique de type Stellarator et fonctionnant en tant qu'oscillateur.

La présente invention sera mieux comprise à la lecture de la description suivante d'exemples de réalisation donnés à titre purement indicatif et nullement limitatif, en référence aux dessins annexés sur lesquels :

- la figure 1 est une vue schématique d'un laser à électrons libres conforme à l'invention, fonctionnant en amplificateur,
- les figures 2A et 2B illustrent schématiquement des enroulements de spires conduisant respectivement à une configuration magnétique de type Stellarator et à une configuration magnétique de type Torsatron, configurations qui sont utilisables dans le laser de la figure 1,
- la figure 3 illustre schématiquement la propriété de transformation rotationnelle que possèdent ces configurations magnétiques,
- la figure 4 illustre schématiquement une source d'électrons utilisable dans le laser de la figure 1,
- la figure 5 est une vue schématique d'un autre mode de réalisation particulier du laser objet de l'invention, fonctionnant en oscillateur, et
- la figure 6 est une vue schématique d'un autre mode de réalisation particulier du laser objet de l'invention, dans lequel le trajet de la lumière produite a la forme d'un polygone.

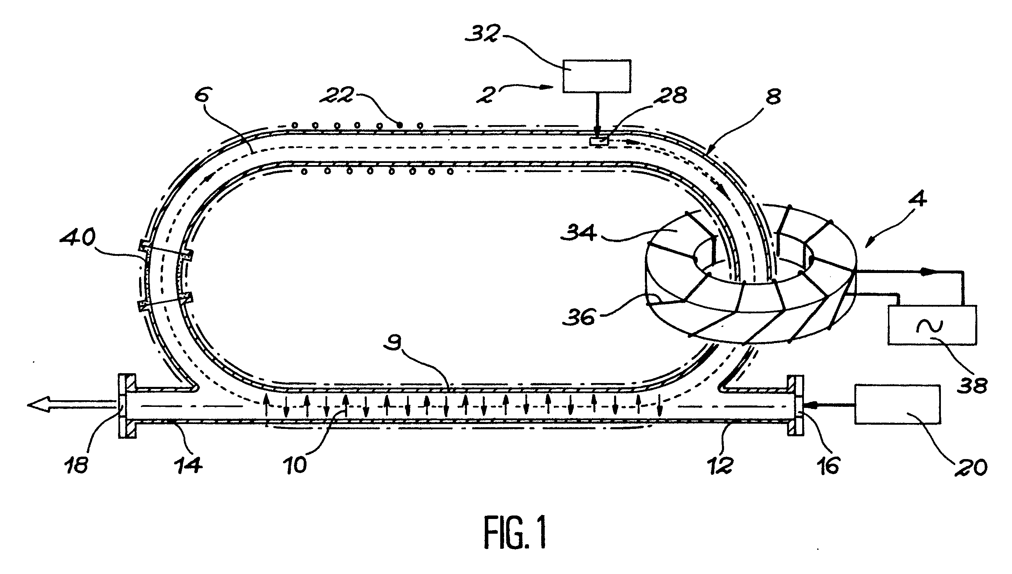

Sur la figure 1, on a représenté schématiquement un laser à électrons libres conforme à l'invention, qui fonctionne en tant qu'amplificateur d'un rayonnement électromagnétique. Ce laser comprend une source d'électrons 2, des moyens d'accélération 4 qui sont prévus pour accélérer les électrons issus de la source 2 et qui fournissent un faisceau 6 d'électrons relativistes et un anneau de stockage 8 du faisceau d'électrons.

Cet anneau de stockage a une forme d'hippodrome et comporte ainsi deux parties rectilignes en regard l'une de l'autre. L'une 9 de ces parties rectilignes est pourvue d'un onduleur magnétique 10. De part et d'autre de cet onduleur magnétique 10, l'anneau de stockage 8 comporte des prolongements 12 et 14 qui s'étendent suivant l'axe de la partie rectiligne 9. Ces prolongement sont fermés par des brides pourvues de fenêtres 16 et 18.

Une source 20 du rayonnement électromagnétique que l'on veut amplifier est placée en regard de l'une des fenêtres, à savoir la fenêtre 16 dans l'exemple représenté, de façon à envoyer ce rayonnement dans l'onduleur 10, dans le sens de la propagation du faisceau d'électrons 6. Le rayonnement ainsi amplifié ressort par l'autre fenêtre 18. Bien entendu, les fenêtres 16 et 18 sont choisies de façon à être transparentes à ce rayonnement (dont la fréquence est choisie dans la bande des fréquences que le laser est capable d'amplifier).

Des moyens non représentés sont bien sûr prévus pour faire le vide dans l'anneau de stockage 8.

De plus, le laser représenté sur la figure 1 comprend des moyens magnétiques 22 qui créent une configuration magnétique permettant au faisceau d'électrons 6 de circuler dans l'anneau de stockage suivant une trajectoire fermée. Ces moyens magnétiques 22 sont constitués par des bobinages appropriés, alimentés en énergie électrique par des moyens non représentés. Ces bobinages sont extérieurs à l'anneau de stockage 8 et sont disposés le long de celui-ci (sauf sur les prolongements 12 et 14).

Ainsi la configuration magnétique, qui est produite par des courants électriques extérieurs à l'anneau de stockage, est de forme annulaire et comporte deux parties rectilignes (correspondant aux deux parties rectilignes de l'anneau de stockage en forme d'hippodrome).

De plus, afin de pouvoir confiner un faisceau d'électrons dont l'énergie peut être de quelques centaines de keV et dont l'intensité peut valoir quelques centaines d'ampères, on choisit une configuration qui a non seulement une composante axiale le long de la trajectoire du faisceau mais encore une composante polloïdale apte à maintenir en équilibre stable l'anneau de courant que constitue le faisceau d'électrons en circulation dans l'anneau de stockage.

Il faut aussi que la configuration magnétique se prête à la mise en place des moyens d'accélération 4 (qui permettent de former le faisceau d'électrons relativistes et de maintenir l'énergie de ce dernier à la valeur correspondant à la résonance du laser).

Pour que toutes ces conditions soient satisfaites, on choisit la configuration magnétique connue sous le nom de "Stellarator" ou une variante de cette dernière, connue sous le nom de "Torsatron" ou "d'Héliotron".

Jusqu'à présent, ces configurations magnétiques ont surtout été développées pour le confinement magnétique de plasmas chauds, dans le domaine de la fusion thermonucléaire contrôlée.

Des informations détaillées sont données sur les Stellarators dans les documents (8) et (9) et sur les Torsatrons dans le document (10). On trouvera également une présentation synthétique de ces configurations dans le document (11).

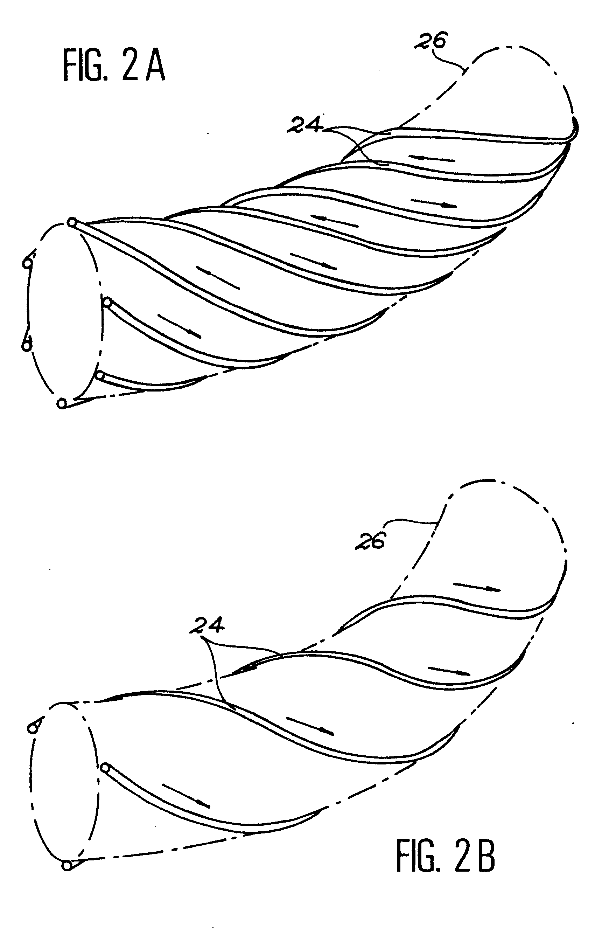

Une configuration de type Stellarator est obtenue en ajoutant à un solénoïde torique, créant un champ toroïdal de guidage, des spires hélicoïdales 24 (figure 2A) qui sont enroulées sur une surface torique 26 qui enferme le volume utile du Stellarator. En partant d'un plan méridien, ces spires se referment sur elles-mêmes en revenant à ce plan méridien de départ. Elles sont en nombre pair et sont parcourues par des courants électriques de sens alternés, de telle sorte qu'elles créent un champ magnétique multipolaire qui s'annule sur l'axe magnétique. Ce dernier est une ligne de champ magnétique particulière qui se referme sur elle-même après un unique tour (dans l'anneau de stokage).

Le Torsatron, ou Héliotron, diffère du Stellarator par le fait que les spires 24, permettant d'obtenir cette configuration de type Torsatron, sont parcourues par des courants électriques de même sens (figure 2B).

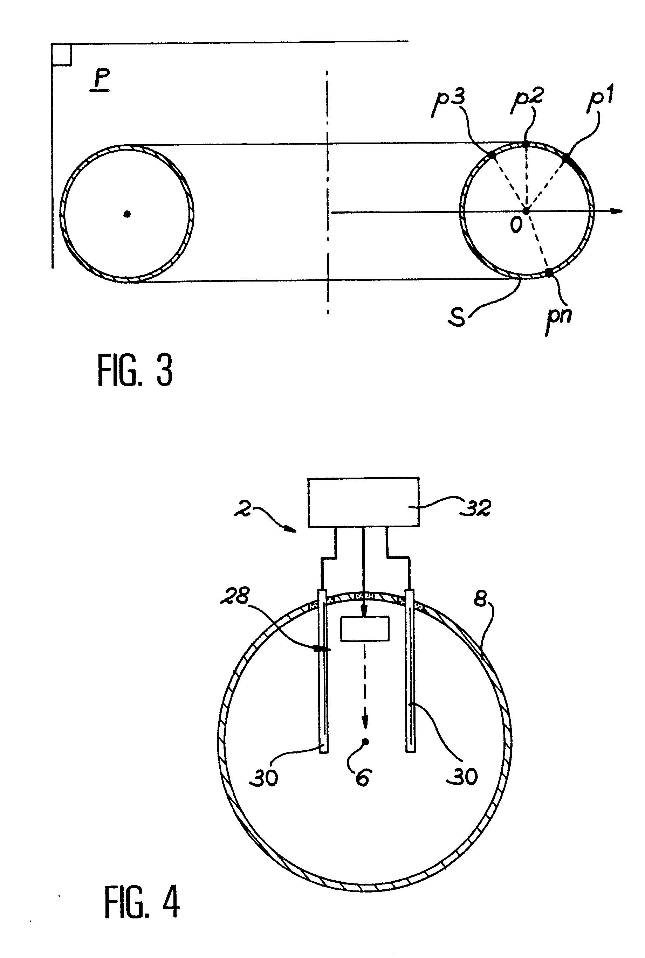

Une propriété essentielle d'une configuration de type Stellarator ou Torsatron est la transformation rotationnelle des lignes de champ magnétique, qui peut être visualisée en considérant une section de la configuration par un plan méridien P (plan de la figure 3), qui contient un axe vertical X.

Si l'on suit une ligne de champ magnétique en partant d'un point p1 du plan P, après un tour complet autour de l'axe X, la ligne de champ recoupe le plan P en un point p2, après deux tours, elle coupe le plan P en un point p3, ... après n tours elle le coupe en un point pn ... Cette ligne de champ s'enroule sur une surface magnétique S de forme torique ou de forme approximativement torique, dont on voit la trace circulaire ou approximativement circulaire dans le plan P.

Il existe une ligne de champ particulière (axe magnétique) qui se referme sur elle-même après un seul grand tour et dont la trace dans le plan P est repérée par le point O, centre de la trace de la surface magnétique S. En réalité, une surface magnétique peut s'écarter notablement d'un tore lorsqu'on s'éloigne de l'axe magnétique.

Une configuration de type Stellarator ou Torsatron est particulièrement intéressante pour le stockage de faisceaux d'électrons intenses au voisinage de l'axe magnétique. En effet, la transformation rotationnelle des lignes de champ magnétique réduit considérablement la dérive moyenne des électrons transversalement au champ magnétique. Il est ainsi possible de confiner les électrons du faisceau pendant un grand nombre de tours de l'anneau de stockage. En l'absence de transformation rotationnelle, les électrons seraient rapidement déviés vers la paroi de l'anneau de stockage.

Dans la présente invention, on n'utilise donc pas les configurations dont les lignes de champ magnétique n'ont pas de transformation rotationnelle.

Dans l'invention, on envisage également les configurations du type Tokamak dont la transformation rotationnelle résulte de la composante poloïdale, due au faisceau d'électrons lui-même.

Revenant à la source d'électrons 2 et aux moyens 4 d'accélération, on peut, dans un mode de réalisation particulier non représenté, injecter de l'extérieur le faisceau d'électrons dans la configuration magnétique (Stellarator ou Torsatron par exemple). Pour ce faire, le faisceau d'électrons est formé et accéléré dans un dispositif indépendant et il est injecté dans la configuration magnétique au moyen d'un dispositif appelé "divertor", en utilisant les "trous" qui existent dans la configuration magnétique au voisinage des points singuliers des lignes de champ, points en lesquels le champ magnétique s'annule.

Néanmoins, il est plus simple de former et d'accélérer le faisceau d'électrons dans l'anneau de stockage 8. A cet effet, on utilise des moyens classiques 28 à cathode émettrice d'électrons (figure 4), qui sont placés à l'intérieur de l'anneau de stockage 8, suffisamment près de la paroi de celui-ci pour ne pas se trouver sur la trajectoire du faisceau d'électrons, et qui comportent des plaques parallèles et métalliques 30, s'étendant jusqu'au niveau du faisceau d'électrons 6, de part et d'autre de ce dernier, et aptes à créer entre elles un champ électrique impulsionnel permettant d'extraire les électrons de la cathode et de les envoyer sur l'axe magnétique de la configuration (axe du faisceau d'électrons 6), le long duquel ils sont ensuite accélérés par les moyens d'accélération 4.

Les moyens 28 sont commandés par des moyens appropriés 32, extérieurs à l'anneau de stockage et reliés aux moyens 28 à travers des passages étanches et électriquement isolants.

Les moyens d'accélération des électrons sont des moyens d'accélération par induction, qui sont adaptés à la production de faisceaux d'électrons intenses dans une configuration magnétique de type Stellarator ou Torsatron.

Jusqu'à présent, de tels moyens d'accélération par induction ont été seulement utilisés pour le chauffage d'un plasma, dans le domaine de la fusion thermonucléaire contrôlée.

L'accélération des électrons par induction consiste à produire un champ électrique accélérateur le long des lignes de force du champ magnétique de confinement (et donc le long de l'axe magnétique), par une variation de flux magnétique dans la boucle formée par l'anneau de stockage.

Pour produire cette variation de flux, on utilise par exemple un noyau de fer 34 qui traverse le "plan" de l'anneau de stockage 8 (surface plane délimitée par cet anneau) et qui est muni d'un enroulement primaire inducteur 36, lui-même muni de moyens d'alimentation électrique appropriés 38. Il s'agit donc, en fait, d'un transformateur dont l'enroulement secondaire est constitué par le faisceau d'électrons 6 à trajectoire fermée dans l'anneau de stockage 8.

Ce circuit se calcule de la même manière qu'un transformateur. Par exemple, pour obtenir un champ électrique de 300V/m, l'utilisation d'une fréquence de l'ordre du kHz (par exemple la fréquence 500 Hz bien connue dans le matériel aéronautique) permet d'aboutir à une masse de fer convenable.

A ce propos, on précise que cet anneau de stockage 8 est fait d'un matériau amagnétique étant donné que la configuration magnétique est engendrée par des enroulements extérieurs à l'anneau de stockage 8. Ce matériau est par exemple la céramique ou le quartz ou, plus simplement, un acier inoxydable amagnétique.

Cependant, dans ce dernier cas, il convient d'interrompre la continuité électrique de l'anneau de stockage 8 pour permettre l'existence du champ électrique induit, le long de l'axe magnétique. A cet effet, on remplace par exemple un tronçon (en acier inoxydable) de l'anneau de stockage 8 par un tronçon 40 amagnétique et électriquement isolant (par exemple en céramique), qui est raccordé de façon étanche au reste de l'anneau de stockage 8 par des brides.

Grâce aux moyens d'accélération par induction, les électrons suivent les lignes de champ magnétique en gagnant de l'énergie dans le champ électrique produit par induction. On peut considérer que la variation de flux produisant le champ électrique est lente par rapport au temps que mettent les électrons à effectuer un tour de l'anneau de stockage et donc, en première approximation, que le champ électrique est constant pendant le processus d'accélération.

L'équation du mouvement d'un électron pendant la phase d'accélération de ce dernier s'écrit donc :

$$(g^2 - 1)^{1/2} = |e|.|E|.T.(m_0.c)^{-1} \qquad (1)$$

avec : $|e|$ : valeur absolue de la charge d'un électron

$|E|$ : module du champ électrique accélérateur

T : temps d'accélération

$g : (1 - v^2/c^2)^{-1/2}$

c : vitesse de la lumière

v : vitesse acquise par l'électron

$m_0$ : masse au repos de l'électron.

L'équation (1) montre qu'il existe une relation simple entre l'énergie des électrons, qui est définie par g, et le produit du module du champ électrique par le temps d'accélération T. C'est donc en agissant sur ce produit que l'on pourra déterminer l'énergie des électrons. On remarquera que le temps d'accélération T ne peut prendre une valeur supérieure au temps de vie des électrons dans l'anneau de stockage.

A titre d'exemple, en considérant un anneau de stockage dont le périmètre est de l'ordre de 4 mètres, une variation de flux magnétique induisant une différence de potentiel de l'ordre de 400 V par tour permet, d'après l'équation (1), d'accélérer des électrons jusqu'à g = 2 en un temps de l'ordre de $3.10^{-5}$ secondes. Il est possible d'augmenter ou de réduire ce temps en jouant sur l'intensité du champ électrique induit.

En pratique, le temps d'accélération des électrons est très court par rapport au temps de variation du flux magnétique d'induction. Par conséquent, il est possible en jouant sur la commande de la cathode émettrice d'électrons, de produire une succession d'impulsions de courant convenablement espacées les unes des autres mais accélérées sur le même quart de période du champ électrique induit, qui est produit par le transformateur.

Bien entendu, on peut également utiliser ce transformateur pour compenser la perte d'énergie subie par les électrons par émission de rayonnement synchrotron et par émission de rayonnement électromagnétique dans l'onduleur 10, en synchronisant convenablement le champ électrique induit avec les électrons (pour que ceux-ci soient réaccélérés à la bonne énergie lorsqu'ils repassent dans le tranformateur).

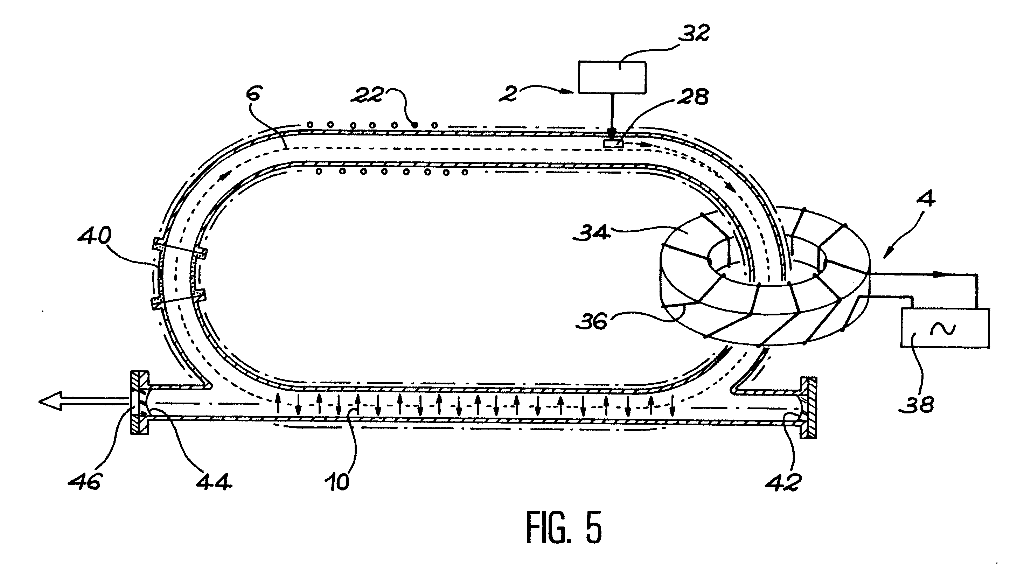

Sur la figure 5, on a représenté schématiquement un autre laser à électrons libres conforme à l'invention. Cet autre laser est un oscillateur et comporte une cavité optique permettant de piéger le rayonnement électromagnétique émis par le faisceau d'électrons relativistes lorsque ce faisceau passe dans l'onduleur magnétique dont est pourvu le laser.

Le laser représenté sur la figure 5 diffère simplement de celui qui est représenté sur la figure 1 par le fait que les fenêtres 16 et 18 sont supprimées et respectivement remplacées par deux miroirs focalisants 42 et 44, qui sont montés de part et d'autre de l'onduleur magnétique 10, sur les faces internes de couvercles de fermeture des prolongements 12 et 14 de l'anneau de stockage.

L'un des deux miroirs, à savoir le miroir 44 dans l'exemple représenté, est semi-transparent, pour laisser passer une partie du rayonnement électromagnétique engendré dans l'onduleur 10, et la bride sur laquelle ce miroir 44 est monté est pourvue d'une fenêtre 46 transparente à ce rayonnement électromagnétique (le miroir 42 étant totalement réflecteur pour ce rayonnement électromagnétique).

Dans une variante non représentée, les deux miroirs 42 et 44 sont totalement réflecteurs vis-à-vis du rayonnement électromagnétique et le miroir 44, qui est situé en regard de la fenêtre 46, est percé en son centre d'une ouverture permettant le passage du rayonnement électromagnétique engendré dans l'onduleur 10.

Pour l'obtention d'un rayonnement d'intensité maximale, il est plus simple d'ajuster l'énergie du faisceau d'électrons que de prévoir des miroirs 42 et 44 à écartement réglable et réglé pour obtenir cette intensité maximale.

Dans la présente invention, au lieu d'utiliser une seule "section laser" nécessairement rectiligne et pourvue d'un onduleur magnétique, on peut utiliser une pluralité de "sections lasers" rectilignes, optiquement réunies par des miroirs aptes à réfléchir le rayonnement électromagnétique engendré dans ces sections (qui sont respectivement pourvues à cet effet d'onduleurs magnétiques). Bien entendu, la configuration magnétique est alors conçue pour que, dans chaque "section laser", le faisceau d'électrons se propage suivant une ligne droite pour interagir avec l'onduleur magnétique correspondant qui engendre un champ magnétique spatialement périodique, dirigé transversalement au faisceau d'électrons.

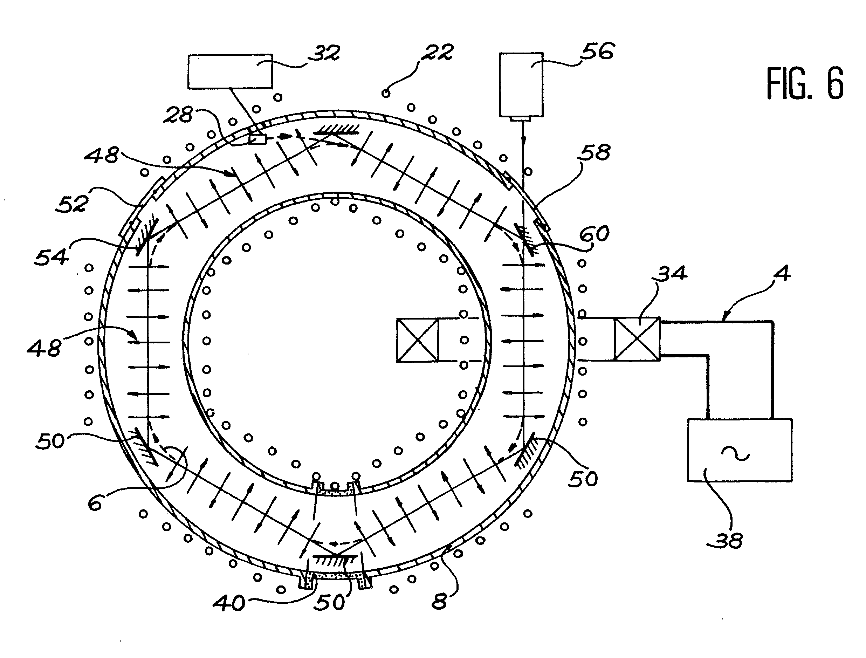

Tout ceci est illustré sur la figure 6 qui représente schématiquement un laser à électrons libres conforme à l'invention et fonctionnant en tant qu'oscillateur, dont l'anneau de stockage 8 est circulaire et comporte des "sections lasers" rectilignes 48, chacune de ces dernières comportant un onduleur 10.

Ces "sections lasers" définissent ainsi un polygone- un hexagone dans l'exemple représenté sur la figure 6- et en chacun des sommets de ce polygone sont placés des miroirs 50 prévus pour réfléchir le rayonnement électromagnétique issu de chaque onduleur magnétique vers l'onduleur magnétique suivant.

La trajectoire du faisceau d'électrons est rectiligne dans chaque onduleur magnétique et s'incurve pour passer dans l'onduleur magnétique suivant où elle est également rectiligne.

Le rayonnement électromagnétique engendré, dont la trajectoire a la forme d'un polygone, est récupéré à l'extérieur de l'anneau de stockage par l'intermédiaire d'une fenêtre 52 transparente à ce rayonnement et montée sur l'anneau de stockage circulaire, en regard de l'un des miroirs 50 qui est semi-transparent vis-à-vis de ce rayonnement électromagnétique et qui porte la référence 54 sur la figure 6.

On voit sur la figure 6 les autres composants du laser, notamment la source d'électrons 2, les moyens 4 d'accélération des électrons et les enroulements extérieurs 22 permettant la propagation du faisceau d'électrons en ligne droite dans les onduleurs 10.

Bien entendu, le laser de la figure 6 peut fonctionner en tant qu'amplificateur du rayonnement électromagnétique, en lui adjoignant une source 56 de ce rayonnement placée en regard d'une autre fenêtre 58 transparente à ce rayonnement, elle-même placée en regard de l'un des miroirs 50, différent du miroir 54 et également semi-transparent vis-à-vis du rayonnement, cet autre miroir semi-transparent portant la référence 60 sur la figure 6.

Le laser à électrons libres schématiquement représenté sur la figure 6 se prête bien à l'utilisation d'une configuration magnétique de type Stellarator et, à ce propos, on pourra se référer à la configuration de type Stellarator qui a été utilisée au Max Planck Institut (IPP) Garching et qui est connue sous le nom de WENDELSTEIN.

## DOCUMENTS CITES

(1) H.J. Barkley et col., Feasibility study on a high power (1 MW) millimeter-wave (140 GHz) transmission system for diagnostics of alpha-particles in JET by collective millimeter-wave scattering, JET-R(88), 14 Janvier 1988

(2) J. Johner, I. Fidone, A conceptual steady state Tokamak reactor with passive current generation, Nuclear Fusion, vol.29, n° 3 (1989)

(3) I. Fidone, G. Granata, J. Johner, Current sustainment by synchrotron radiation in a Tokamak device, Phys. fluids 31, Août 1988, p.2300-2309

(4) W. Henle et col., Study of ECW transmission lines for NET, 28 février 1989, ITER-IL-HD-6-9-E

(5) D.W. Ignat et col., The compact ignition Tokamak and electron cyclotron heating, PPPL-2584, janvier 1989

(6) J.M. Ortéga et M. Billardon, Le laser à électrons libres, Pour la science, avril 1986, p.91 à 100

(7) F. Hartemann, J.M. Buzzi, High efficiency millimeter wave free electron laser experiments, Proc. 10 th Int. Conf. on F.E.L., Jerusalem, Israël, 29 Août 1988

(8) L. Spitzer, Le principe du Stellarator, p.2170, Conf. Int., Genève 1958

(9) F.F Chen et col., Runaway electrons and cooperative phenomena observed in B.I. Stellarator, p.358, Conf. Int., Genève 1958

(10) C. Gourdon et col., The Torsatron without toroidal coils- a solution of the divertor problem, Nuclear fusion, 11(1971), p.161

(11) La fusion thermonucléaire contrôlée par confinement magnétique, Masson Editeur, Paris (1987)

## Revendications

1. Laser à électrons libres, caractérisé en ce qu'il comprend :
- une source (2) d'électrons,
- des moyens (4) d'accélération qui sont aptes à accélérer les électrons issus de la source et qui fournissent un faisceau d'électrons (6),
- un anneau de stockage (8) de ce faisceau d'électrons, comportant au moinsune partie rectiligne (9),
- des moyens magnétiques (22) prévus pour créer une configuration magnétique fermée, ayant une première composante de champ magnétique, qui est principalement dirigée parallèlement au faisceau d'électrons (6) en circulation et qui permet le confinement de ce faisceau, et une seconde composante de champ magnétique, qui est apte à compenser la dérive des électrons transversalement à l'axe du faisceau d'électrons (6), et
- au moins un onduleur magnétique (10) dont est muni l'anneau de stockage, qui est placé au niveau de ladite partie rectiligne et qui est traversé par le faisceau d'électrons en circulation dans l'anneau.

2. Laser selon la revendication 1, caractérisé en ce que la seconde composante est une composante poloïdale donnant aux lignes de champ magnétique une transformation rotationnelle permettant la compensation de dérive.

3. Laser selon la revendication 2, caractérisé en ce que la configuration magnétique est de type Stellarator ou de type Torsatron ou de type Tokamak.

4. Laser selon l'une quelconque des revendications 1 à 3, caractérisé en ce que la source d'électrons (2) est placée à l'intérieur de l'anneau de stockage (8) et comprend des moyens (28) d'émission d'électrons et d'envoi de ceux-ci sur l'axe magnétique de la configuration magnétique, axe magnétique le long duquel ils sont ensuite accélérés.

5. Laser selon l'une quelconque des revendications 1 à 4, caractérisé en ce que les moyens d'accélération des électrons comprennent des moyens aptes à engendrer et à faire varier temporellement un flux magnétique dans une surface plane délimitée par l'anneau de stockage, la variation de flux magnétique induisant, dans l'anneau de stockage, un champ électrique longitudinal restituant à chaque tour la puissance dépensée par les électrons dans l'émission laser.

6. Laser selon la revendication 5, caractérisé en ce que les moyens (4) d'accélération des électrons comprennent un transformateur comportant :
- un circuit magnétique (34) traversant la surface plane délimitée par l'anneau de stockage (8), et
- un circuit primaire (36) commandé de façon à obtenir ladite variation de flux magnétique, le faisceau d'électrons en circulation dans l'anneau de stockage (8) formant un circuit secondaire pour le transformateur.

7. Laser selon l'une quelconque des revendications 1 à 6, caractérisé en ce que le trajet suivi par le faisceau d'électrons comporte une pluralité de parties rectilignes, en ce que le laser comprend une pluralité d'onduleurs magnétiques (10) respectivement placés au niveau des parties rectilignes, et successivement traversés par le faisceau d'électrons et en ce que le laser comprend en outre, entre chaque onduleur magnétique et l'onduleur magnétique suivant, des moyens (50) de réflexion de lumière tels que la lumière engendrée dans chaque onduleur soit réfléchie vers l'onduleur suivant.

8. Laser selon la revendication 7, caractérisé en ce que les onduleurs magnétiques (10) sont répartis le long de l'anneau de stockage (8), de sorte que la trajectoire de la lumière engendrée dans le laser a la forme d'un polygone régulier.

FIG. 1

EP 0 415 823 A1

FIG. 2 A

FIG. 2 B

EP 0 415 823 A1

_P_

p3  p2  p1

0

S  pn

## FIG. 3

2  32

28  8

30  6  30

## FIG. 4

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | NTIS TECH NOTES, novembre 1986, page 1625; "Rapid electron beam accelerator invented" <br> * En entier * | 1-6 | H 01 S 3/09 |
| Y | EP-A-0 165 146  (C.N.R.S.) <br> * Abrégé; figure 1 * | 1-6 | |
| A | OPTICS COMMUNICATIONS, vol. 50, no. 1, mai 1984, pages 41-44; R. COLELLA et al.: "Proposal for a free electron laser in the X-ray region" <br> * Figure 1 * | 1,7,8 | |
| A | IEEE TRANSACTIONS ON NUCLEAR SCIENCE, vol. NS-32, no. 5, octobre 1985, pages 3265-3267; A. PRAKASH et al.: "Recent rebatron studies" | | |
| A | IEEE TRANSACTIONS ON NUCLEAR SCIENCE, vol. NS-30, no. 4, août 1983, pages 3162-3164; C.W. ROBERSON et al.: "The stellation --A strong-focusing, high-current beta-tron" | | |
| A | IEEE TRANSACTIONS ON NUCLEAR SCIENCE, vol. NS-30, no. 4, août 1983, pages 3212-3214; A. MONDELLI et al.: "A high-current racetrack induction accelerator" | | |

**DOMAINES TECHNIQUES RECHERCHES (Int. Cl.5)**

H 01 S
H 05 H

Le présent rapport de recherche a été établi pour toutes les revendications

| Lieu de la recherche | Date d'achèvement de la recherche | Examinateur |
|---|---|---|
| La Haye | 06 décembre 90 | GALANTI M. |